# EUROPÄISCHE PATENTANMELDUNG

(11) **EP 1 314 619 A1**
(43) Veröffentlichungstag der Anmeldung: **28.05.2003**
(21) Anmeldenummer: 01127905.6
(22) Anmeldetag: 23.11.2001
(51) Int. Cl.: B60R 21/20

(54) **Gasgenerator für einen Lenkradairbag eines Kraftfahrzeugs**

(71) Anmelder: Firma Carl Freudenberg, 69469 Weinheim (DE)
(72) Erfinder: Dürre, Markus, 87477 Sulzberg (DE); Back, Friedrich, 79379 Müllheim (DE)

(57) **Zusammenfassung**

Gasgenerator mit einem Filterrohr zur Aufnahme einer Treibstofffüllung für einen Airbag am Lenkrad eines Kraftfahrzeugs, wobei der Gasgenerator als Schwingungstilger ausgebildet ist und über ein gasundurchlässiges, die Form eines hohlen Kegelstumpfes aufweisenden Federelements aus polymerem Material und einen Flansch mit dem Lenkrad verbunden ist, wobei die Verbindung beziehungsweise Verbindungen zwischen Federelement (1), Filterrohr (3) und / oder Befestigungsflansch (2) als formschlüssige Schnappverbindung beziehungsweise -verbindungen ausgebildet sind.

## Beschreibung

Die Erfindung betrifft einen Gasgenerator mit einem Filterrohr zur Aufnahme einer Treibstofffüllung für einen Airbag am Lenkrad eines Kraftfahrzeugs, wobei der Gasgenerator als Schwingungstilger ausgebildet ist und über ein gasundurchlässiges, die Form eines hohlen Kegelstumpfes aufweisenden Federelements aus polymerem Material und einen Flansch mit dem Lenkrad verbunden ist.

Die bei Kraftfahrzeugen während der Fahrt oder auch im Stillstand mit laufendem Motor auftretenden Schwingungen können sich auf die Lenksäule und von dort aus auf das Lenkrad übertragen. Um diesen Schwingungen am Lenkrad entgegenzuwirken und den Fahrkomfort zu verbessern, sind Schwingungstilger bekannt geworden, bei denen der Gasgenerator als Schwingmasse verwendet wird.

### Stand der Technik

Durch die EP 1 026 050 ist beispielsweise eine Lösung bekannt geworden, bei der der Gasgenerator über einen Montagezylinder aus einem elastischem Werkstoff im Airbagmodul gehalten wird. Die Ränder des Montagezylinders sind mit dem Gasgenerator und einem Montageblech durch Vulkanisieren verbunden. Der Gasgenerator seinerseits ist von einem Montageflansch eingefasst. Diese Lösung wirft fertigungstechnische Probleme auf.

### Darstellung der Erfindung

Der Erfindung liegt die Aufgabe zugrunde, einen als Schwingungstilger dienenden Gasgenerator zu schaffen, der möglichst einfach hergestellt und der leicht innerhalb des Airbagmoduls am Lenkrad montiert werden kann. Darüber hinaus soll die Treibstofffüllung problemlos in das Filterrohr eingefügt werden können.

Die Lösung der gestellten Aufgabe erfolgt bei einem Gasgenerator der eingangs genannten Gattung erfindungsgemäß dadurch, dass die Verbindung beziehungsweise Verbindungen zwischen Federelement, Filterohr und / oder Befestigungsflansch als formschlüssige Schnappverbindung beziehungsweise - verbindungen ausgebildet sind. Gemäß dieser Lehre ist es möglich, zunächst das Filterrohr auf einfache Weise herzustellen mit der Treibstofffüllung zu versehen und dann als Gasgenerator in das Federelement einzuschieben. Durch entsprechende Ausbildung des Filterrohres des Federelements und / oder des Befestigungsflanschs kann der Gasgenerator leicht mit dem Federelement und Befestigungsflansch verbunden werden, indem er druckknopfartig in entsprechende Schnappverbindungen einrastet. Die bisher übliche Verbindung von Filterrohr und Federelement durch Vulkanisation entfällt.

Die Schnappverbindung zwischen Filterrohr und Federelement kann dadurch hergestellt werden, indem das Filterrohr auf seiner Außenwand mit einer umlaufenden Wulst versehen wird, die beispielsweise durch Stauchung des Filterrohres hergestellt werden kann oder durch Anbringung eines zusätzlichen Vorsprungs (zum Beispiel eines aufgedrückten Flansches). Das Federelement seinerseits wird an wenigstens einem seiner äußeren Ränder mit einer Aufdickung versehen, wobei wenigstens in eine dieser Aufdickungen eine Nut für die Aufnahme der Filterrohrwulst und / oder des Befestigungsflansches eingebracht ist. Dieses ist die einfachste Form von verschiedenen möglichen Ausführungen. Mit der einen Nut am Federelement wird die Wulst des Filterrohres umfasst, während die andere Nut des Federelements den Befestigungsflansch einschließt. Es ist natürlich auch eine weitere vereinfachte Ausführungsform möglich, bei der lediglich die Wulst des Filterrohres in die Nut des Federelements eingeknöpft wird, während der andere Rand des Federelements mit dem Befestigungsflansch durch Vulkanisation verbunden ist. Die Vulkanisation zwischen Federelement und Befestigungsflansch ist relativ einfach durchzuführen gegenüber einer Vulkanisation am Filterrohr.

Um eine höhere Steifigkeit im Bereich der Schnappverbindung zu erreichen, kann in wenigstens eine der Aufdickungen ein Verstärkungskern höherer Festigkeit aus Metall oder Kunststoff eingefügt werden. Dieser Verstärkungskern ist komplett mit dem Material des Federelements umspritzt, so dass er gegen Korrosion geschützt ist, sofern er aus Metall ist. Hierdurch wird eine hohe Alterungsbeständigkeit und Temperaturunempfindlichkeit im Bereich der Schnappverbindungen erzielt.

In weiterer Ausgestaltung des Erfindungsgedankens können die Aufdickungen auf ihrer der Wulst und / oder dem Befestigungsflansch zugewandten Randseite mit einem Formkern versehen werden, welcher mit der zugehörigen Nut für die Filterrohrwulst und / oder den Befestigungsflansch ausgestattet ist. Dieser Formkern kann wieder aus Metall, Kunststoff oder einem hochfesten, alterungs- und temperaturunempfindlichen Polymer besteht. Da ein solcher Formkern an sich wenig nachgiebig ist, ist es günstig, wenn er mit einer Gleitschräge für den Einschub des Filterrohres in das Federelement beziehungsweise Aufschub des Federelements auf den Befestigungsflansch versehen ist. Im Extremfall können diese Gleitschrägen durch nachgiebige Widerhaken gebildet werden.

Um Beschädigungen am Luftsack durch den schwingenden Gasgenerator zu vermeiden und den schwingenden Gasgenerator nicht zu blockieren, wird der Gasgenerator in vielen Fällen von einem Luftsackabstandshalteblech eingefasst. Hierbei wird angestrebt, dass das Luftsackabstandshalteblech zentrisch mit gleichem Abstand den Gasgenerator einschließt. Diese zentrische Lage des Luftsackabstandshalteblech kann gemäß einem weiteren Schritt der Erfindung dadurch sichergestellt werden, dass der Befestigungsflansch an seinem inneren Rand T-förmig oder L-förmig nach oben ausgebildet ist. Der nach oben weisende Rand des Querbalkens am T oder eines Lsorgt für eine Zentrierung des Luftsackabstandshalteblechs.

Zur weiteren Kostensenkung ist es möglich als Befestigungsflansch das Bodenblech des Airbagmoduls zu verwenden. Der gesonderte Befestigungsflansch entfällt dann.

Um allzu große Ausschläge des Gasgenerators zu vermeiden, kann die Aufdickung zur Filterrohrwulst auf ihrer radialen Außenseite mit auf ihrem Umfang gleichmäßig verteilten Anschlagstoppern versehen sein.

### Kurzbeschreibung der Zeichnung

In der beiliegenden Zeichnung wird die Erfindung anhand mehrerer Ausführungsbeispiele näher erläutert.

Es zeigt:
- Fig. 1: eine Seitenansicht eines Filterrohres, teilweise im Schnitt, mit dem Federelement und den Schnappverbindungen,
- Fig. 2: das Detail x der Fig. 1 in vergrößerter Ansicht,
- Fig. 3: das Filterrohr nach Fig. 1 in der Draufsicht,
- Fig. 4: ein Filterohr in der Seitenansicht mit einer anderen Ausführungsform des Federelements,
- Fig. 5: das Detail x der Fig. 4 vergrößert,
- Fig. 6: das Filterrohr in der Seitenansicht mit einer weiteren möglichen Ausführungsform des Federelements,
- Fig. 7: das Details x der Fig. 6 in vergrößerter Ausführung,
- Fig. 8: ein Filterrohr mit einem Luftsackabstandshalteblech in der Seitenansicht, teilweise im Schnitt und
- Fig. 9: das Detail x der Fig. 8 vergrößert.

### Ausführung der Erfindung

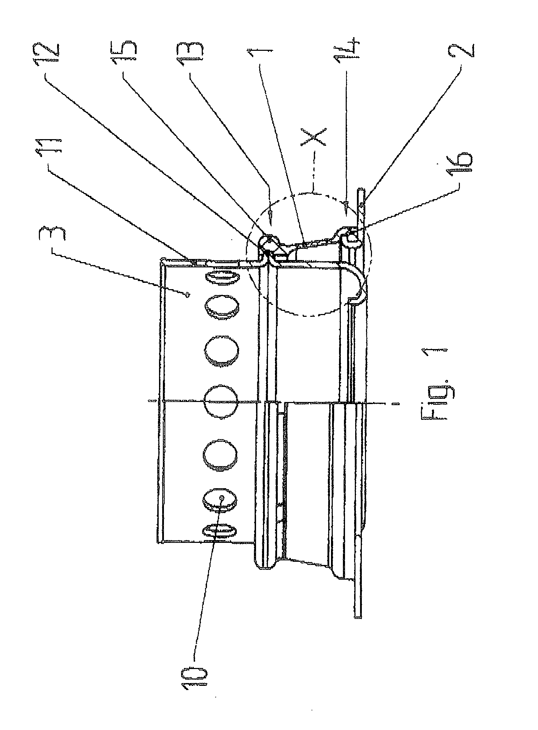

In der Fig. 1 ist das Filterrohr 3 gezeigt, das über das Federelement 1 mit dem Befestigungsflansch 2 verbunden ist. Auf der linken Seite der Fig. ist das Filterrohr 3 mit dem Federelement 1 in der Seitenansicht gezeigt. Die rechte Seite der Fig. zeigt das Filterrohr 3 im Schnitt. Eine nicht näher gezeigte Treibstofffüllung wird in das Filterrohr 3 eingesetzt. Die Öffnungen 10 sind Gasaustrittsöffnungen. Das Filterrohr 3 ist auf seiner Außenwand 11 mit der umlaufenden Wulst 12 versehen, die durch einen Stauchvorgang hergestellt wurde. Das Federelement 1 hat die Form eines hohlen Kegelstumpfes und besteht aus einem gasundurchlässigen polymeren Material. An seinen äußeren Rändern 13 und 14 hat es die Aufdickungen 15 und 16, die jeweils mit einer Nut 17 und 18 versehen sind. Mit der Nut 17 umgreift das Federelement 1 die Wulst 12 des Filterrohrs 3 und mit der Nut 18 den umgebogenen Rand des Befestigungsflanschs 2. Die Wulst 12 und der Rand des Befestigungsflansches 2 ergeben mit den Nuten 17 und 18 die Schnappverbindungen.

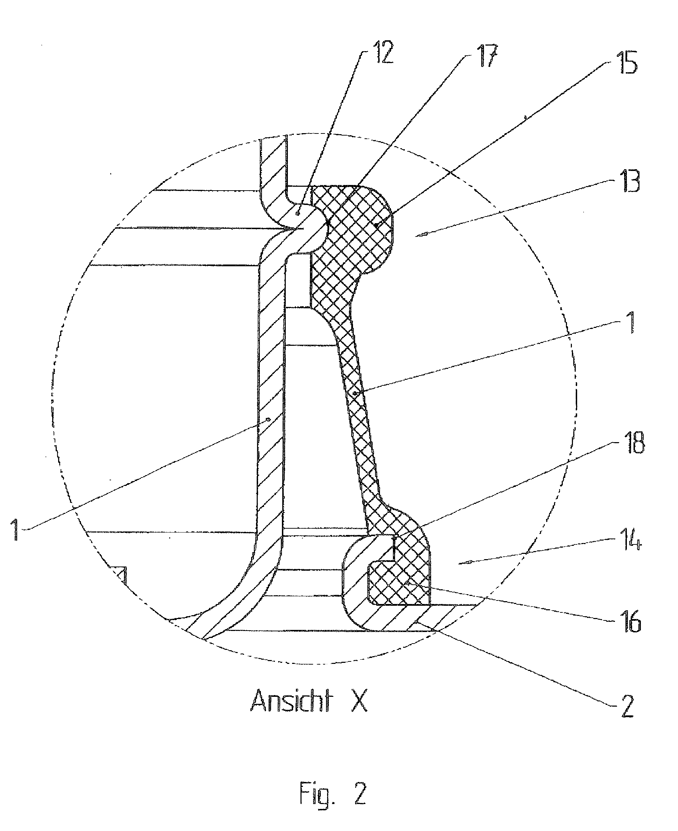

In der Fig. 2 ist im vergrößerten Maßstab das Detail x der Fig. 1 dargestellt. Bei der Montage wird zunächst das Federelement 1 mit dem Befestigungsflansch 2 verbunden, indem die Aufdickung 16 mit der Nut 18 über den Rand des Befestigungsflanschs 2 gezogen wird. Nachdem der Befestigungsflansch 2 mit dem Federelement 1 in das Airbagmodul eingesetzt ist, kann das Filterrohr 3 mit dem dort eingefügten Gasgenerator auf einfache Weise in das Federelement 1 eingeschoben werden, das Filterrohr 3 arretiert dann mit seiner Wulst 12 in der Nut 17 des oberen Randes 13 des Federelements 1.

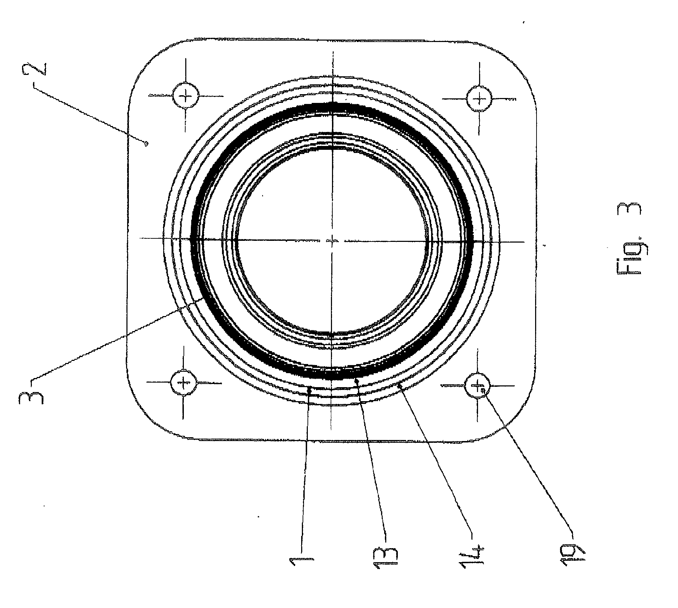

In der Fig. 3 ist das Filterrohr 3 mit Federelement 1 und Befestigungsflansch 2 in der Draufsicht gezeigt. Der Befestigungsflansch 2 ist etwa quadratisch und mit vier Löchern 18 zur Durchführung von Befestigungsschrauben versehen.

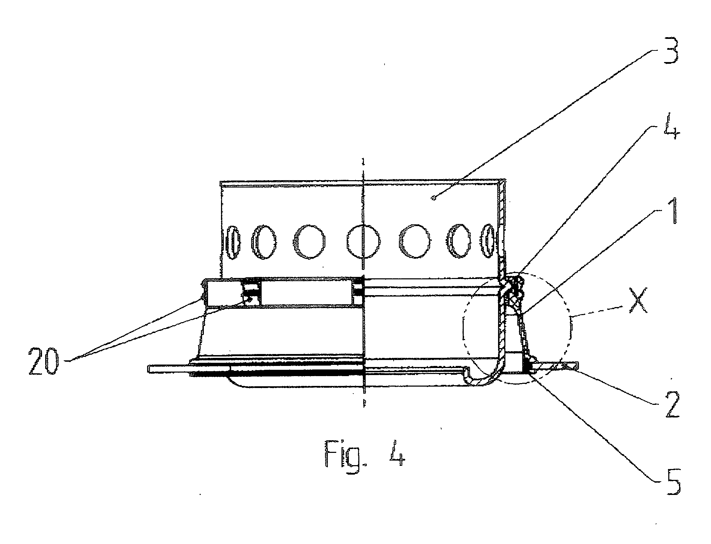

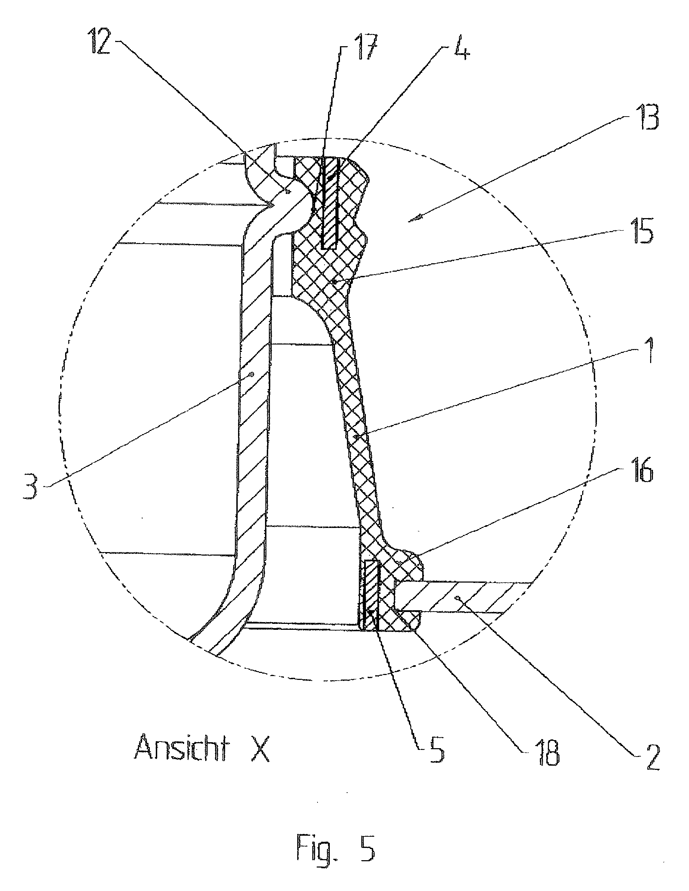

In der Fig. 4 und 5 ist das Filterrohr 3 ebenfalls in der Seitenansicht gezeigt, jedoch mit einem etwas anders ausgebildeten Federelement 1. Auch der innere Rand des Flansches 2 ist geringfügig anders gestaltet. In diesem Ausführungsbeispiel sind die Aufdickungen 15 und 16 im Bereich der Schnappverbindungen mit den Verstärkungskernen 4 und 5 versehen, die von dem polymeren Material des Federelements 1 eingefasst sind. Diese Verstärkungskerne 4 und 5 erteilen dem Federelement 1 im Bereich der Schnappverbindungen eine erhöhte Festigkeit. Je nach Einsatzbedingungen können die Verstärkungskerne 4 und 5 aus Metall, Kunststoff oder einem anderen geeigneten Werkstoff sein. Die Montage zwischen dem Federelement 1 und dem Befestigungsblech 2 geschieht durch Einschnappen des Befestigungsbleches 2 in die Nut 18 des Federelements 1. Die Befestigung des Filterrohrs 3 erfolgt in gleicher Weise, wie bei der Fig. 1 bereits geschildert, indem das Filterrohr 3 mit seiner Wulst 12 in die Nut 17 des Federelements 1 eingedrückt wird. Die Aufdickungen 15 am oberen Rand 13 des Federelements 1 haben auf ihrer radialen Außenseite mehrere auf ihrem Umfang mehrere gleichmäßig verteilte Anschlagstopper 20.

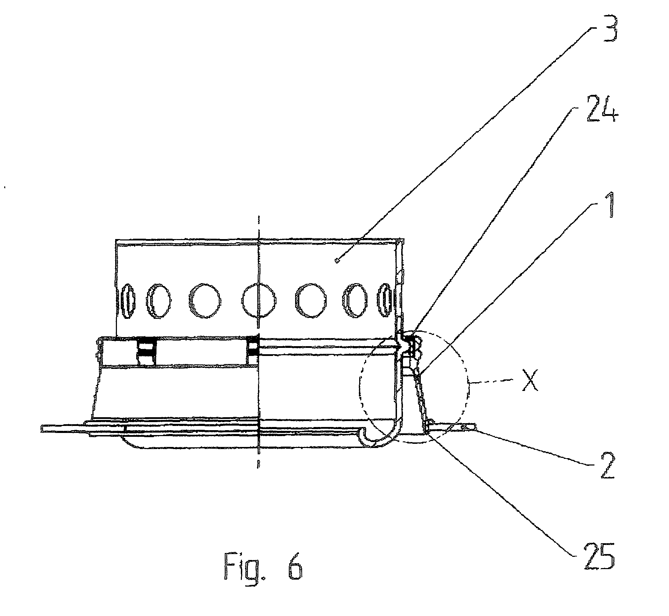

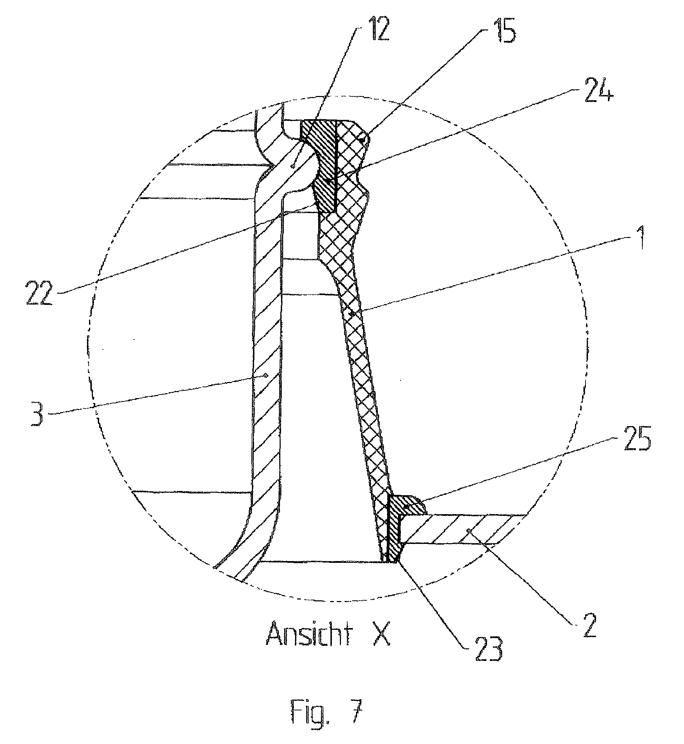

In den Fig. 6 und 7 ist eine mit den Fig. 4 und 5 vergleichbare Ausführungsform von Filterrohr 3 und Federelement 1 gezeigt, mit der Abweichung, dass die Aufdickungen 15 und 16 auf ihrer der Wulst 12 und dem Befestigungsflansch 2 zugewandten Randseite mit den Formkernen 24 und 25 versehen sind. Die Formkerne 24 und 25 haben die Nuten 17 und 18 für das Einschnappen auf der Wulst 12 beziehungsweise dem Befestigungsflansch 2. Diese Formkerne 24 und 25 werden aus einem erheblich weniger elastischen Material hergestellt, als es das Federelement 1 ist. Zur Verbesserung der Einschnappfähigkeit werden die Formkerne 24 und 25 mit Gleitschrägen 22 und 23 versehen, welche den Einschub des Filterrohrs 3 in das Federelement 1 beziehungsweise den Aufschub des Federelements 1 auf den Befestigungsflansch 2 erleichtern. In Extremfällen können die Gleitschrägen 22, 23 durch nachgiebige Widerhaken gebildet sein. Diese Widerhaken können durch Ausnehmungen in den Formkernen 24 und 25 gebildet werden.

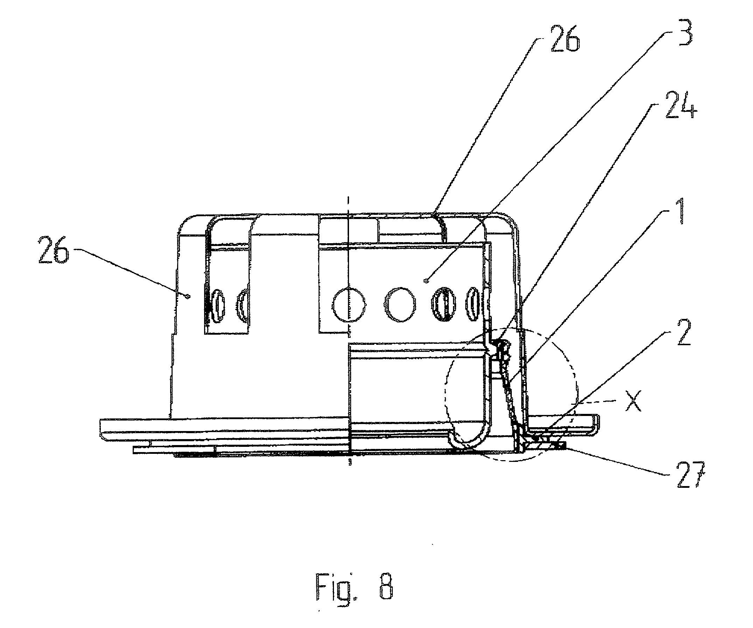

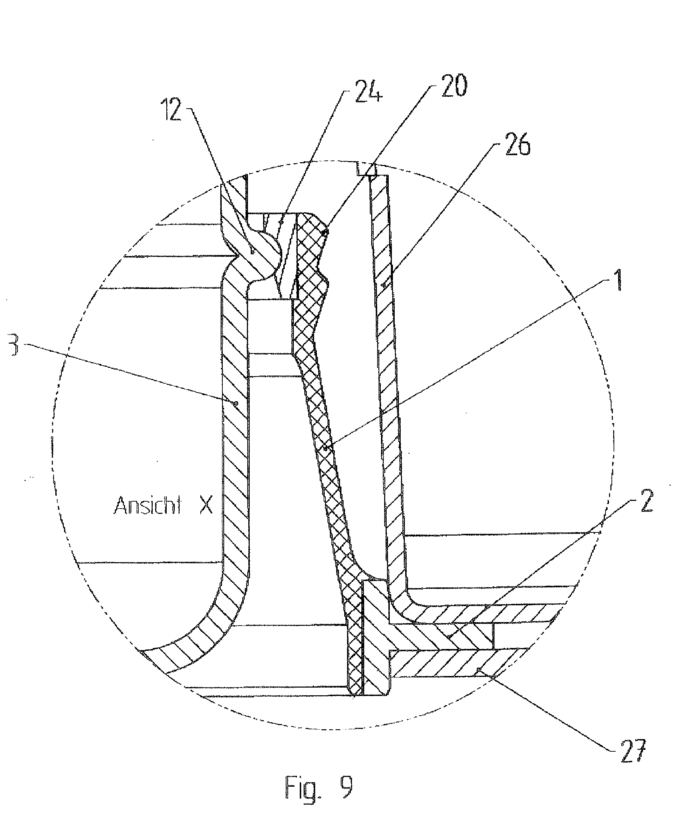

Die Fig. 8 und 9 zeigen das Filterrohr 3 mit Federelement 1 eingefügt in ein Luftsackhalteblech 26. Das Federelement 1 ist an seinem oberen Rand mit dem Formkern 24 versehen. In die Nut 17 des Formkerns 24 greift die Wulst 12 des Filterrohrs 3 ein. Der untere Rand des Federelements 1 ist mit dem Befestigungsflansch 2 durch Vulkanisation verbunden. Der Befestigungsflansch 2 ist zu seinem inneren Rand hin T-förmig ausgebildet, dadurch kann sowohl der Flansch 2 als auch das Luftsackabstandshalteblech 26 zentrisch zu einem Boden- oder Hubblech 27 oder dergleichen des Airbagmoduls ausgerichtet und daran befestigt werden. Das Luftsackabstandshalteblech liegt mit seinem unteren Rand am oberen Balken des T-förmigen Befestigungsflanschs 2 an, während letzterer mit seinem unteren Balken am Bodenblech 27 abgestützt ist. In der Fig. 9 wird sichtbar, dass der Anschlagstopper 20 bei einer starken Schwingbewegung des Filterrohrs 3 am Luftsackabstandshalteblech 26 zum Anschlag kommt, bevor das Filterrohr 3 am Federelement 1 im Bereich des Befestigungsflanschs 2 zur Anlage kommen kann.

In Fortführung des Erfindungsgedankens kann das Bodenblech 27 des Airbagmoduls als Befestigungsflansch 2 herangezogen werden. In diesem Fall übernimmt das Bodenblech 27 alle vorangeschilderten Aufgaben des Befestigungsflanschs 2 mit entsprechender Ausbildung des Bodenblechs 27.

In den Fig. 1 bis 7 sind Ausführungsformen gezeigt worden, bei denen das Federelement 1 sowohl mit dem Befestigungsflansch 2 als auch mit dem Filterrohr 3 über eine Schnappverbindung verbunden wird. Im Rahmen des Erfindungsgedankens sind jedoch alle Möglichkeiten offen, indem die eine oder andere Schnappverbindung als Klebe- oder Vulkanisationsverbindung ausgeführt wird, wie das beispielhaft in den Fig. 8 und 9 gezeigt ist. In erster Linie kommt hier die Verbindung zwischen dem Federelement 1 und dem Befestigungsflansch 2 als Vulkanisations- oder Klebeverbindung in Frage.

## Patentansprüche

1. Gasgenerator mit einem Filterrohr zur Aufnahme einer Treibstofffüllung für einen Airbag am Lenkrad eines Kraftfahrzeugs, wobei der Gasgenerator als Schwingungstilger ausgebildet ist und über ein gasundurchlässiges, die Form eines hohlen Kegelstumpfes aufweisenden Federelements aus polymerem Material und einen Flansch mit dem Lenkrad verbunden ist, **dadurch gekennzeichnet, dass** die Verbindung beziehungsweise Verbindungen zwischen Federelement (1), Filterrohr (3) und / oder Befestigungsflansch (2) als formschlüssige Schnappverbindung beziehungsweise -verbindungen ausgebildet sind.

2. Gasgenerator nach Anspruch 1, **dadurch gekennzeichnet, dass** das Filterrohr (3) auf seiner Außenwand eine umlaufende Wulst (12) hat.

3. Gasgenerator nach Anspruch 2, **dadurch gekennzeichnet, dass** die Wulst (12) durch Stauchung des Filterrohrs (3) oder durch einen zusätzlichen Vorsprung (zum Beispiel einen Clinchflansch) gebildet ist.

4. Gasgenerator nach einem der Ansprüche 1 bis 3, **dadurch gekennzeichnet, dass** das Federelement (1) an wenigstens einem seiner äußeren Ränder (13, 14) mit Aufdickungen (15, 16) versehen ist.

5. Gasgenerator nach Anspruch 4, **dadurch gekennzeichnet, dass** wenigstens eine der Aufdickungen (15, 16) eine Nut (17, 18) für die Aufnahme der Filterrohrwulst (12) und / oder des Befestigungsflansches (2) hat.

6. Gasgenerator nach einem der Ansprüche 1 bis 5, **dadurch gekennzeichnet, dass** in wenigstens eine der Aufdickungen (15, 16) im Bereich der Schnappverbindungen ein Verstärkungskern (4, 5) höherer Festigkeit aus Metall oder Kunststoff eingefügt ist.

7. Gasgenerator nach einem der Ansprüche 1 bis 5, **dadurch gekennzeichnet, dass** die Aufdickung beziehungsweise die Aufdickungen (15, 16) auf ihrer der Wulst (12) und / oder dem Befestigungsflansch (2) zugewandten Randseite mit einem Formkern (24, 25) versehen ist beziehungsweise sind, der beziehungsweise die mit der Nut (17, 18) für die Filterrohrwulst (12) und / oder den Befestigungsflansch (2) ausgestattet ist beziehungsweise sind.

8. Gasgenerator nach Anspruch 7, **dadurch gekennzeichnet, dass** der beziehungsweise die Formkerne (24, 25) aus Metall, Kunststoff oder einem hochfesten alterungs- und temperaturunempfindlichen Polymer (Gummi) besteht beziehungsweise bestehen.

9. Gasgenerator nach Anspruch 7 oder 8, **dadurch gekennzeichnet, dass** der beziehungsweise die Formkerne (24, 25) Gleitschrägen (22, 23) für den Einschub des Filterrohres (3) beziehungsweise Aufschub auf den Befestigungsflansch (2) haben.

10. Gasgenerator nach Anspruch 9, dass die Gleitschrägen (22, 23) durch nachgiebige Widerhaken gebildet sind.

11. Gasgenerator nach einem der Ansprüche 1 bis 10, **dadurch gekennzeichnet, dass** der Gasgenerator von einem Luftsackabstandshalteblech (26) eingefasst ist.

12. Gasgenerator nach einem der Ansprüche 1 bis 11, **dadurch gekennzeichnet, dass** der Befestigungsflansch (2) an seinem inneren Rand T-förmig oder L-förmig nach oben ausgebildet ist.

13. Gasgenerator nach einem der Ansprüche 1 bis 12, **dadurch gekennzeichnet, dass** als Befestigungsflansch (2) das Bodenblech (27) des Airbagmoduls verwendet wird.

14. Gasgenerator nach einem der Ansprüche 1 bis 13, **dadurch gekennzeichnet, dass** die Aufdickung (13) zur Filterrohrwulst (12) hin auf ihrer radialen Außenseite mit auf ihrem Umfang gleichmäßig verteilten Anschlagstoppern (20) versehen ist.
